# EUROPÄISCHE PATENTSCHRIFT

(11) **EP 0 542 044 B1**
(45) Veröffentlichungstag und Bekanntmachung des Hinweises auf die Patenterteilung: **20.12.1995**
(21) Anmeldenummer: 92118461.0
(22) Anmeldetag: 29.10.1992
(51) Int. Cl.: F23R 3/12, F23R 3/50, F23D 11/40

(54) **Verfahren zum Betrieb einer Ringbrennkammer**
Annular combustion system
Système de chambre de combustion annulaire

(30) Priorität: 13.11.1991 CH 3308/91
(43) Veröffentlichungstag der Anmeldung: 19.05.1993
(73) Patentinhaber: ASEA BROWN BOVERI AG, 5400 Baden (CH)
(72) Erfinder: Keller, Jakob, Prof.Dr., Redmond, Washington 98052 (US); Sattelmayer, Thomas, Dr., D-5318 Mandach (CH); Senior, Peter, Dr., D-5507 Mellingen (CH)
(74) Vertreter: Klein, Ernest

(56) Entgegenhaltungen:
- EP-A- 0 378 505
- EP-A- 0 387 532
- DE-A- 3 837 635
- FR-A- 2 406 726
- GB-A- 2 015 651
- US-A- 3 714 778
- US-A- 4 100 733

## Beschreibung

### Technisches Gebiet

Die vorliegende Erfindung betrifft eine Brennkammer gemäss Oberbegriff des Anspruchs 1. Sie betrifft auch ein verfahren zum Betrieb einer solchen Brennkammer.

### Stand der Technik

Der Uebergang von den konventionellen topfförmigen Brennkammern zu den Ringbrennkammern, welche unzweideutig zumindest Platzvorteile mit sich bringen, weil sie regelmässig ringförmig den Mittelteil des Rotors der Gasturbine umschliessen, gestaltet sich hinsichtlich der Fahrprozedur, soweit nach dem Stand der Technik ersichtlich ist, nicht im erwünschten Mass optimal. Eine intelligente Fahrprozedur für gasförmige Brennstoffe, deren Menge in Abhängigkeit zum jeweiligen Betriebspunkt zur Verfügung steht, ist nicht auszumachen, insbesondere wenn zugrundegelegt wird, dass minimierte Schadstoff-Emissionen zu erzielen sind. Mit anderen Worten, die Platzvorteile, die eine Ringbrennkammer unbestritten bietet, dürfen im Gegenzug nicht zu einer Erhöhung der Schadstoff-Emissionen aus der Verbrennung führen.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art eine Fahrprozedur vorzuschlagen, welche eine Minimierung der Schadstoff-Emissionen ermöglicht.

Der wesentliche Vorteil der Erfindung ist darin zu sehen, dass sich, unabhängig der Grösse der Ringbrennkammer und der Anzahl der dort eingesetzten Brenner, eine optimierte Fahrprozedur durchführen lässt.

Ein weiterer wesentlicher Vorteil der Erfindung ist darin zu sehen, dass zur Leistungssteigerung einer Gasturbine oft Wasser oder Dampf in die Flamme eingespritzt wird. Dies führt bei reinen Vormischbrennern oft zu einem Flammenlöschen oder zu Schwingungsproblemen. Bei der gewählten Anordnung wird mit steigender Wasser- oder Dampfmenge ein steigender BrennstoffAnteil durch eine Kopfstufe in den Brennern eingedüst, dergestalt, dass damit ein Flammenlöschen oder das Auftreten von Schwingungsproblemen verhindert werden.

Ein weiterer wesentlicher Vorteil der Erfindung liegt im günstigen Gesamtverhalten der Brenner sowohl bei der Zündung als auch während des Betriebes. Die Brenner selbst befinden sich am Kopf der Ringbrennkammer und bilden prinzipiell einen doppelten Ring auf der Frontwand. Im Wechsel sind jeweils zwei Brenner nach aussen bzw. nach innen verschoben, dies um ein günstiges Strömungsfeld für die Verbrennung zu erhalten. Die Brenner in jedem Ring haben den gleichen Drehsinn und haben den ungekehrten Drehsinn gegenüber den Brennern im anderen Ring, dies alles um eine starke Querströmung längs der Brennkammerwände und im Zentrum zu erreichen. Was die Brenner selbst betrifft, so teilen sie sich in pilotierende und pilotierte Brenner auf, wobei diese in kleinerer Anzahl gegenüber jenen vorliegen. Die Lage der pilotierten Brenner wird vorzugsweise so gewählt, dass sie gut von den pilotierenden Brennern eingeschlossen werden: Dies führt zu einem guten Ausbrand in jenem Betriebsbereich, in welchem die pilotierten Brenner keine eigene Flamme erzeugen können und statt dessen nur ein sehr mageres Gemisch in die heissen Abgase der pilotierenden Brenner eindüsen.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnungen ein Ausführungsbeispiel der Erfindung näher erläutert. Alle für das unmittelbare Verständnis der Erfindung nicht erforderlichen Elemente sind fortgelassen. In den verschiedenen Figuren sind gleiche Elemente mit den gleichen Bezugszeichen versehen. Die Strömungsrichtung der Medien ist mit Pfeilen angegeben.

### Kurze Beschreibung der Zeichnungen

Es zeigt:
- Fig. 1: einen schematischen Sektorabschnitt der Frontwand einer Ringbrennkammer,
- Fig. 2: eine mit Brennern bestückte Frontwand einer Ringbrennkammer, wobei die schematisierte Wiedergabe der Brenner die Ausführungsform gemäss Fig. 4-7 entspricht,
- Fig. 3: eine simulierte Wiedergabe des Stromlinienverlaufes auf der Frontwand,
- Fig. 4: einen in perspektivischer Darstellung gezeigten Brenner,
- Fig. 5-7: entsprechende Schnitte durch die Ebenen V-V (entspricht Fig. 5), VI-VI (entspricht Fig. 6), VII-VII (entspricht Fig 7), wobei diese Schnitte nur eine schematische, vereinfachte Darstellung des Brenners gemäss Fig. 4 wiedergeben.

### Wege zur Ausführung der Erfindung, gewerbliche Anwendbarkeit

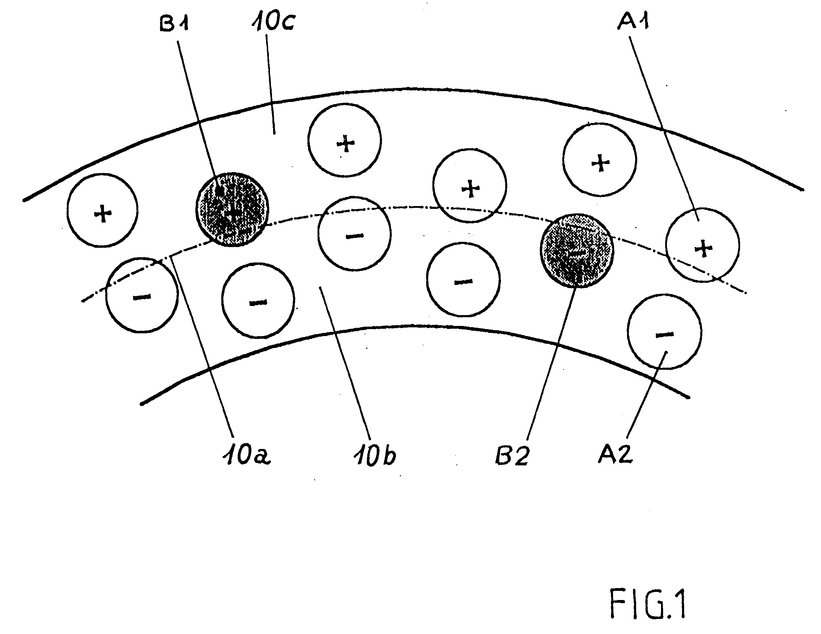

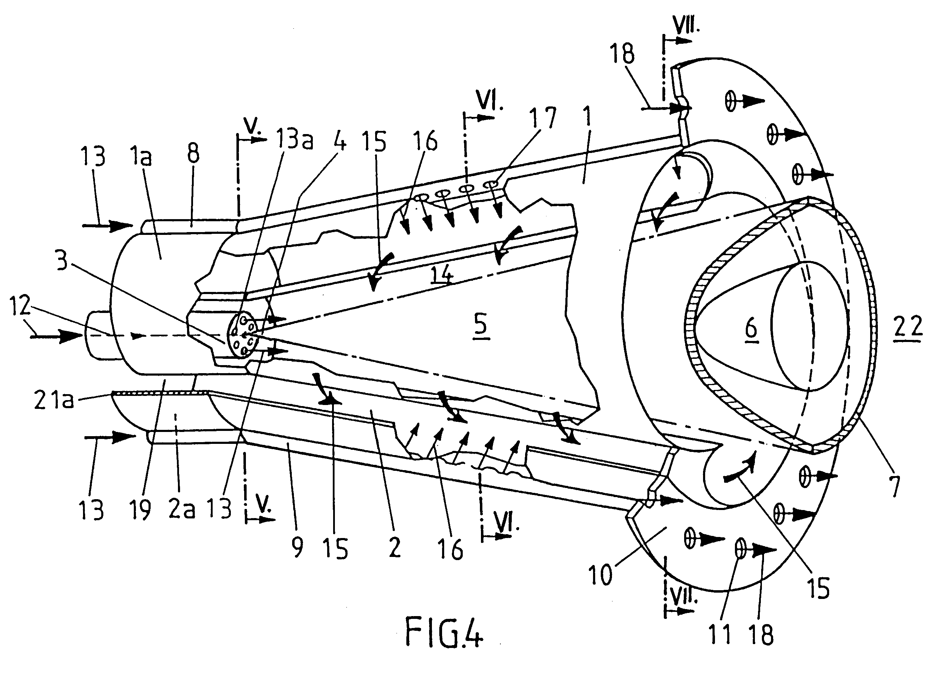

Fig. 1 zeigt einen Sektorabschnitt einer Frontwand 10 einer Ringbrennkammer. Zum besseren Verständnis über die weitere Ausgestaltung der Ringbrennkammer wird auf EP-A1-0 401 529 und Brennkammern gemäß DE-A-3 837 635 verwiesen. Die Ringbrennkammer besitzt eine Reihe von Brennern, deren Zahl von der Maschinen- und Brennergrösse abhängt. Die Kopfstufen, deren Ausgestaltung vorzugsweise aus der schematischen Darstellung gemäss Fig. 4 ausgebildet ist, aller Brenner werden an eine Brennstoffzufuhr angeschlossen. Die Hauptstufen werden zu 2 Gruppen zusammengeführt, deren Brenneranteil pro Gruppe grundsätzlich an die jeweilige Maschine angepasst wird. Die beiden Gruppen unterscheiden sich dadurch voneinander, dass eine Gruppe pilotierende Brenner A1, A2, die andere Gruppe pilotierte Brenner B1, B2 sind. Grundsätzlich ist es so, dass die Anzahl der pilotierende Brenner A1, A2 ungleich grösser als diejenige der pilotierten Brenner B1, B2 ist. Die Schaltprozedur vorliegender Ringbrennkammer geht davon aus, dass der Verdichter der Gasturbogruppe mit verstellbaren Vorleitreihen ausgerüstet ist, und somit die Luftmenge gegenüber der Vollastmenge um mindestens 15% verringert werden kann. Beim Start und beim Hochfahren der Gasturbine wird der Brennstoff auf die Kopfstufe, wozu hier auf die Fig. 4-7 verwiesen wird, der pilotierenden Brenner A1, A2 verteilt. Die Stellung der Vorleitreihe ist hierbei beliebig. Spätestens sobald die Synchronisation mit dem Netz erfolgt ist, muss die Vorleitreihe geschlossen werden. Bis zu einer Last von etwa 65-80% bleibt die Vorleitreihe zunächst geschlossen. Darüber hinaus wird sie kontinuierlich geöffnet. Mit steigender Last wird die Brennstoffmenge der pilotierenden Brenner A1, A2 zu einem grösser werdenden Teil der Hauptstufe zugeführt. bei etwa 40-55% Last sind dann die Kopfstufen weitgehend ausser Betrieb, und die pilotierenden Brenner A1, A2 werden mit reiner Vormischung betrieben. Zwischen 40-55% und 65-80% Maschinenleistung bleibt die Brennstoffmenge der pilotierenden Brenner A1, A2 weitgehend unverändert. Die Leistung wird durch Erhöhung der Brennstoffmenge zur Hauptstufen der pilotierten Brenner B1, B2 gesteigert. Sobald die Brennstoffmenge aller Brenner gleich ist, ist auch der Betriebspunkt erreicht, ab welchem die Ringbrennkammer mit allen Brennern im reinen vorgemischten Betrieb betrieben wird. Darüber hinaus wird die Brennstoff- und die Luftmenge weitgehend proportional gesteigert, um die Luftzahl auf einem Optimalwert zu halten. Die Brenner, sowohl die pilotierenden als auch die pilotierten, bilden prinzipiell einen doppelten Ring 10b, 10c auf der Frontwand 10 der Ringbrennkammer, wie dies die Symmetrielinie 10a zum Ausdruck bringt. Allerdings sind im Wechsel jeweils zwei Brenner nach aussen bzw. nach innen verschoben, dies um ein günstiges Strömungsfeld für die Verbrennung zu erhalten. Die Brenner in jedem Ring haben den gleichen Drehsinn, der entgegengesetzt demjenigen des benachbarten Ringes ist, wie die Plus- und Minus-Zeichen in den Brennern versinnbildlichen wollen. Diese Konfiguration bewirkt, dass eine starke Strömung längs der Brennkammerwände und im Zentrum erzielt wird. Wichtig ist dabei die Lage der pilotierten Brenner B1, B2: Sie sind möglichst gut von den anderen Brennern, d.h von den pilotierenden Brennern A1, A2, eingeschlossen. Dies führt zu einem guten Ausbrand in jenem Betriebsbereich, in welchem die pilotierten Brenner B1, 82 keine eigene Flamme erzeugen können, wobei dies im Betriebsbereich zwischen 40-55% und 65-80% der Fall ist, und stattdessen wird nur ein sehr mageres Gemisch in die heissen Abgase der pilotierenden Brenner A1, A2 eingedüst.

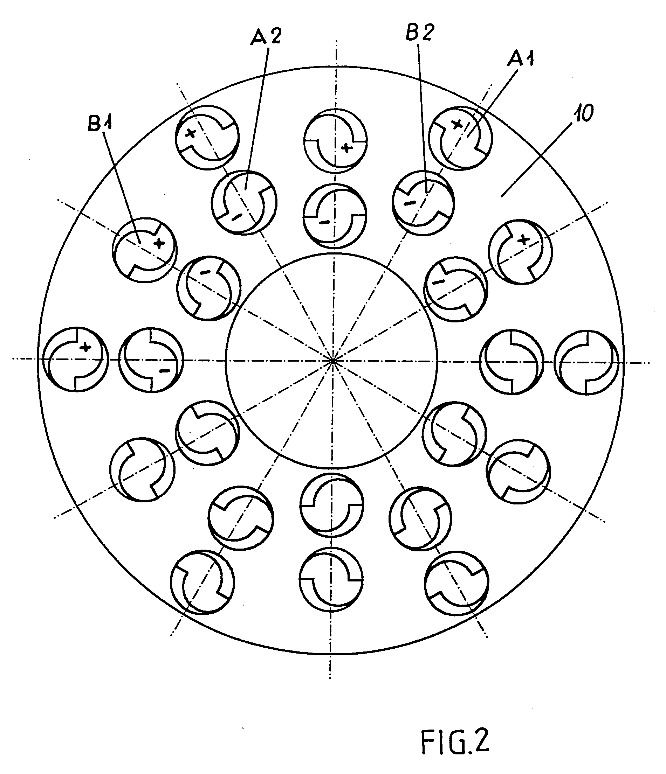

Fig. 2 zeigt die ganze Frontwand 10 der Ringbrennkammer, wobei der Anteil der pilotierten Brenner B1, B2 bloss 1/6 der ganzen Menge ausmacht. Sonach betrifft ein Anteil von 5/6 die pilotierenden Brenner A1, A2. Diese Aufteilung stellt eine Vorzugsvariante dar. Es lassen sich sicher, je nach Art der Ringbrennkammer, auch andere Aufteilungen vorstellen.

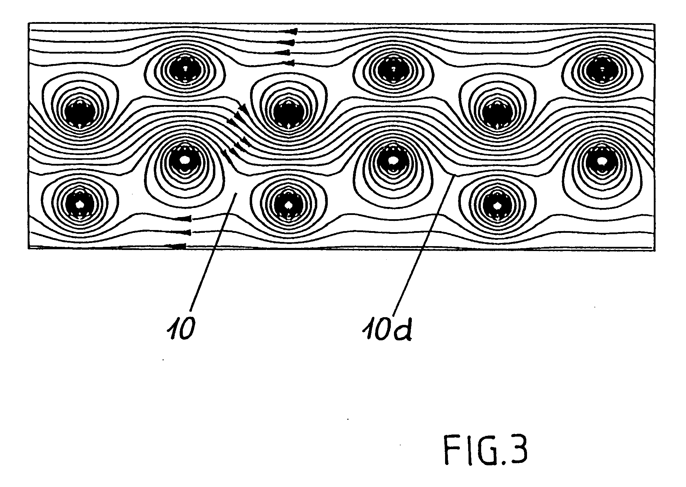

Fig. 3 zeigt die auf der Frontwand 10 versuchsmässig sich bildenden Strömungslinien 10d während des Betriebes. Die Konfiguration der Strömungslinien 10d entfalten eine grosse Wirkung im Gesamtverhalten der Brennkammer, insbesondere während des Zündungsvorganges: Die Dichtheit der Strömungslinien 10d zueinander deutet auf eine hohe Geschwindigkeit hin, diese hohe Geschwindigkeit, welche sich besonders gut, wie ersichtlich, im Bereich der Symmetrielinie (Vgl. Fig. 1) einstellt, sorgt dafür, dass sich die Zündung von den pilotierenden Brennern auf die pilotierten übertragen kann.

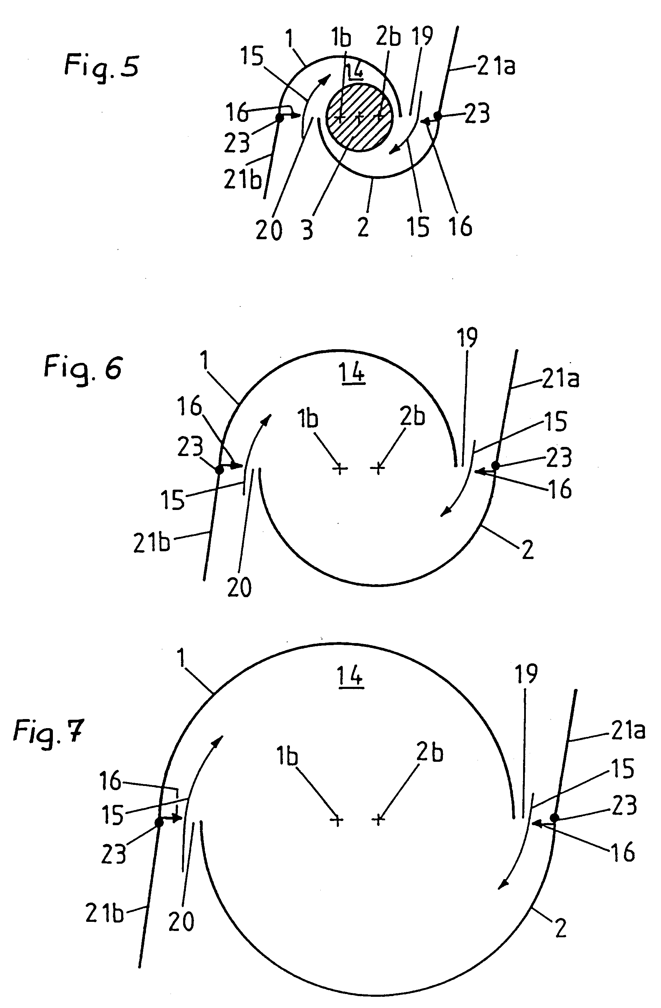

Um den Aufbau des Brenners besser zu verstehen, ist es vorteilhaft, wenn gleichzeitig zu Fig. 4 die einzelnen darin ersichtlichen Schnitte, die auf die Fig. 5-7 hinweisen, herangezogen werden. Des weiteren, um Fig. 4 bestmöglich übersichtlich zu gestalten, sind in ihr die nach den Fig. 5-7 schematisch gezeigten Leitbleche 21a, 21b nur andeutungsweise aufgenommen worden. Im folgenden wird bei der Beschreibung der Fig. 4 nach Bedarf auf die Fig. 5-7 hingewiesen.

Fig. 4 zeigt in perspektivischer Ansicht den Brenner, der an sich eine integrierte Vormischzone aufweist. Der Brenner selbst besteht aus zwei halben hohlen Teilkegelkörper 1, 2, die aufeinander liegen, und bezüglich ihrer Längssymmetrieachse radial vesetzt zueinander stehen. Diese Versetzung der jeweiligen Längssymmetrieachse 1b, 2b (Vgl. hierzu Fig. 5-7) zueinander schafft auf beiden Seiten der Teilkegelkörper 1, 2 in entgegengesetzter Einströmungsanordnung jeweils einen tangentialen Lufteintrittsschlitz 19, 20 frei (Vgl. hierzu Fig. 5-7), durch welche die Verbrennungsluft 15 in den Innnenraum des Brenners, d.h. in den von beiden Teilkegelkörpern 1, 2 gebildeten Kegelhohlraum 14, strömt. Die Kegelform der gezeigten Teilkegelkörper 1, 2 weist in Strömungsrichtung einen bestimmten festen Winkel auf. Selbstverständlich können die Teilkegelkörper 1, 2 in Strömungsrichtung eine progressive oder degressive Kegelneigung aufweisen. Die beiden letztgenannten Ausführungsformen sind zeichnerisch nicht erfasst, indessen sind sie ohne weiteres nachempfindbar. Welche Form schlussendlich den Vorzug erhalten wird, hängt im wesentlichen von den jeweils vorgegebenen Verbrennungs-Parametern ab. Die beiden Teilkegelkörper 1, 2 haben je einen zylindrischen Anfangsteil 1a, 2a, welche eine Fortsetzung der Teilkegelkörper 1, 2 bilden, demnach sind auch die tangentialen Eintrittsschlitze 19, 20 vorhanden, wodurch sich die letztgenannten über die ganze Länge des Brenners erstrecken. Selbstverständlich kann der Brenner rein kegelig ausgebildet werden, also ohne einen zylindrischen Anfangsteil 1a, 2a ausgeführt werden; des weiteren kann dieser Anfangsteil auch nicht zylindrisch ausgeführt werden. In diesem nun zylindrisch ausgeführten Anfangsteil 1a, 2a ist eine Düse 3, die sogenannte Kopfstufe, untergebracht, deren Brennstoffzuführung aus einer zentralen Brennstoffeindüsung 4 eines flüssigen Brennstoffes 12, vorzugsweise Oel, und aus einer im wesentlichen koaxialen Brennstoffeindüsung eines gasförmigen Brennstoffes 13 besteht. Die Brennstoffeindüsung des gasförmigen Brennstoffes 13 geschieht über eine Reihe von Eindüsungsöffnungen 13a, welche sich kranzförmig um die zentrale Brennstoffeindüsung 4 aneinanderreihen. Allgemein kann es sich bei den genannten Brennstoffeindüsungen um eine luftunterstützte Eindüsung oder um eine Druck-Zerstäubung handeln. Sonach erfolgen die Brennstoffeindüsungen in etwa im Bereich des engsten Querschnittes des durch die zwei Teilkegelkörper 1, 2 gebildeten kegeligen Hohlraumes 14. Beide Teilkegelkörper 1, 2 weisen im Bereich der tangentialen Lufteintrittsschlitze 19, 20 je eine Brennstoffleitung 8, 9 auf, welche längsseitig mit einer Anzahl Oeffnung 17 versehen sind, durch welche ein gasförmiger und/oder flüssiger Brennstoff 13, wobei vorzugsweise Gas zum Einsatz kommen wird, eingedüst wird, der sich mit der durch die tangentialen Lufteintrittsschlitze 19, 20 in den Kegelhohlraum 14 einströmenden Verbrennungsluft 15 vermischt, wie die Pfeile 16 versinnbildlichen wollen. Diese Brennstoffleitungen 8, 9, welche die sogenannte Hauptstufe des Brenners bilden, sind vorzugsweise am Ende der tangentialen Einströmung, vor Eintritt in den Kegelhohlraum 14 plaziert, dies um eine optimale Luft/Brennstoff-Mischung zu erhalten, bevor das Gemisch in den Kegelhohlraum 14 einströmt. Selbstverständlich ist ein Mischbetrieb mit den beiden Brennstoffzuführungen, also einmal über die zentrale Düse 3 und einmal über die Brennstoffleitungen 8, 9, möglich. Brennraumseitig 22 geht die Ausgangsöffnung des Brenners in eine Frontwand 10 über, in welcher eine Anzahl Bohrungen 11 vorhanden sind. Diese dienen zur Kühlung der Brennerstirnseite. Es sind auch andere Kühltechniken denkbar.. Der durch die Düse 3 strömende flüssige Brennstoff 12 wird in einem spitzen Winkel in den Kegelhohlraum 14 eingedüst, dergestalt, dass sich in der Brenneraustrittsebene ein möglichst homogenes kegeliges Sprühbild einstellt, was nur möglich ist, wenn die Innenwände der Teilkegelkörper 1, 2 durch die Brennstoffeindüsung 4 nicht benetzt werden. Zu diesem Zweck wird das kegelige aus einem Flüssigbrennstoff bestehende Profil 5 von der tangential einströmenden Verbrennungsluft 15, und allenfalls von einem weiteren in der Figur nicht ersichtlichen, axial herangeführten Verbrennungsluftstrom umschlossen. In axialer Richtung wird die Konzentration des flüssigen Brennstoffes 12 fortlaufend durch die eingemischten Verbrennungsluftströme abgebaut. Wird über die Brennstoffleitungen 8, 9 bespielsweise ein gasförmiger Brennstoff 13 eingebracht, so geschieht die Gemischbildung mit der Verbrennungsluft 15 direkt im Bereich der Lufteintrittsschlitze 19, 20. Beim Einsatz eines flüssigen Brennstoffes wird die Eindüsung entsprechend verlagert. Minimierte Schadstoff-Emissionswerte lassen sich immer dann erreichen, wenn eine vollständige Verdampfung vor Eintritt in die Verbrennungszone stattfindet. Gleiches gilt auch für den nahstöchiometrischen Betrieb, wenn die Ueberschussluft durch ein rezirkulierendes Abgas ersetzt wird. Bei der Gestaltung der Teilkegelkörper 1, 2 hinsichtlich des Kegelwinkels und der Breite der tangentialen Lufteintrittsschlitze 19, 20 sind enge Grenzen einzuhalten, damit sich das gewünschte Strömungsfeld der Luft mit der Rückströmzone 6 im Bereich der Brennermündung einstellt. Allgemein lässt sich sagen, dass eine Verkleinerung der Lufteintrittsschlitze 19, 20 die Rückströmzone 6 weiter stromaufwärts verschiebt, was eine frühere Zündung des Luft/Brennstoff-Gemisches auslöst. Indessen ist festzustellen, dass die einmal fixierte Rückströmzone 6 an sich positionsstabil ist, denn die Drallzahl nimmt in Strömungsrichtung im Bereich der Kegelform des Brenners zu. Die Achsialgeschwindigkeit des Gemisches lässt sich zudem durch die vorne erwähnte axiale Zuführung eines Verbrennungsluftstromes beeinflussen. Die Konstruktion des Brenners eignet sich vorzüglich, bei einer vorgebenen Baulänge die Grösse der tangentialen Lufteintrittsschlitze 19, 20 zu verändern, indem die Teilkegelkörper 1, 2 zu- oder auseinander geschoben werden, wodurch sich der Abstand der beiden Mittelachsen 1b, 2b verkleinert resp. vergrössert, dementsprechend sich auch die Spaltgrösse der tangentialen Lufteintrittsschlitze 19, 20 verändert, wie sich dies aus Fig. 5-7 besonders gut nach empfinden lässt. Selbstverständlich sind die Teilkegelkörper 1, 2 auch in einer anderen Ebene zueinander verschiebbar, wobei sogar eine Ueberlappung derselben angesteuert werden kann. Ja es ist ferner möglich, die Teilkegelkörper 1, 2 durch eine gegenläufige drehende Bewegung spiralartig ineinander zu verschieben, oder die Teilkegelkörper 1, 2 in Längsrichtung gegeneinander zu verschieben. Somit hat man es mit einfachsten Vorkehrungen in der Hand, die Form und die Grösse der tangentialen Lufteintrittsschlitze 19, 20 beliebig zu varieren, womit der Brenner ohne Veränderung seiner Baulänge in einer gewissen betrieblichen Bandbreite individuell angepasst werden kann.

Aus Fig. 5-7 geht nunmehr die geometrische Konfiguration der Leitbleche 21a, 21b hervor. Sie erfüllen Strömungseinleitungsfunktionen, wobei sie, entsprechend ihrer Länge, das jeweilige Ende der Teilkegelkörper 1, 2 in Anströmungsrichtung der Verbrennungsluft 15 verlängern. Die Kanalisierung der Verbrennungsluft 15 in den Kegelhohlraum 14 kann durch Oeffnen bzw. Schliessen der Leitbleche 21a, 21b um einen im Bereich des Eintrittes in den Kegelhohlraum 14 plazierten Drehpunkt 23 optimiert werden, insbesondere ist dies jeweils vonnöten, wenn die ursprüngliche Spaltgrösse der tangentialen Lufteintrittsschlitze 19, 20 eine Veränderung erfahren muss. Selbsverständlich kann der Brenner auch ohne Leitbleche betrieben werden, oder es können hierfür andere Hilfsmittel vorgesehen werden.

## Patentansprüche

1. Brennkammer einer Gasturbine, welche ringförmig den Mittelteil des Rotors der Gasturbogruppe umschliesst, mit einer Anzahl Brenner, die auf der Frontwand der Brennkammer wirkbar sind, wobei die Brenner auf der Frontwand eine Ebene einnehmen, entlang der Frontwand (10) der Brennkammer mindestens einen doppelten Ring (10b, 10c) bilden, in jedem Ring den gleichen Strömungsdrehsinn aufweisen, und wobei der Strömungsdrehsinn der Brenner eines jeden Ringes entgegengesetzt demjenigen des benachbarten Ringes ist, dadurch gekennzeichnet, dass im jeden Ring im Wechsel jeweils mindestens ein Brenner nach aussen bzw. nach innen verschoben ist und dass die Anzahl der Brenner auf der Frontwand in pilotierende Brenner (A1, A2) und pilotierte Brenner (B1, B2) aufgeteilt ist.

2. Brennkammer nach Anspruch 1, dadurch gekennzeichnet, dass die Anzahl der Brenner auf der Frontwand (10) in 5/6 pilotierende Brenner (A1, A2) und 1/6 pilotierte Brenner (B1, B2) aufgeteilt ist.

3. Brennkammer nach Anspruch 1, dadurch gekennzeichnet, dass der Brenner aus zwei in Strömungsrichtung aufeinander positionierten, hohlen kegelförmigen Teilkörpern (1, 2) besteht, deren Längssymmetrieachsen (1b, 2b) zueinander versetzt verlaufen, wodurch strömungsmässig entgegengesetzte tangentiale Lufteintrittsschlitze (19, 20) für einen Verbrennungsluftstrom (15) entstehen, dass im von den kegelförmigen Teilkörper (1, 2) gebildeten Kegelhohlraum (14) mindestens eine als Kopfstufe ausgebildete Düse (3) zur Eindüsung eines flüssigen und eines gasförmigen Brennstoffes (12, 13) plaziert ist, dass im Bereich der tangentialen Lufteintrittsschlitze (19, 20) eine als Hauptstufe ausgebildete Brennstoffzuführungsstufe (8, 9) zur Einbringung eines gasförmigen Brennstoffes (13) vorhanden ist.

4. Verfahren zum Betrieb einer Brennkammer nach den Ansprüchen 1-4, dadurch gekennzeichnet, dass beim Start und beim Hochfahren der Brennkammer der Brennstoff auf die Kopfstufe (3) der pilotierenden Brenner (A1, A2) verteilt wird, dass bei 40-55% Last die Kopfstufen (3) ausser Betrieb gesetzt werden und die Brennstoffmenge für die pilotierenden Brenner (A1, A2) über die weitere Zuführungsstufe (8, 9) zugeführt wird, dass zwischen 40-55% und 65-80% Last die Brennstoffmenge für die pilotierenden Brenner (A1, A2) konstant bleibt, dass über 65-80% eine Inbetriebssetzung der pilotierten Brenner (B1, B2) erfolgt.

5. Verfahren nach Anspruch 4, dadurch gekennzeichnet, dass bei Einspritzung eines Anteils Wasser oder Dampf in die Flamme (7) ein steigender Anteil Brennstoff (12) über die Kopfstufe (3) eingedüst wird.

6. Verfahren nach Anspruch 4, dadurch gekennzeichnet, dass die kopfseitige Brennstoffeindüsung (4) in den Kegelhohlraum (14) des Brenners eine in Strömungsrichtung sich kegelig ausbrei tende, die Innenwände des Kegelhohlraumes (14) nicht benetzende Brennstoffsäule (5) bildet, welche von mindestens einem über die Eintrittsschlitze (19, 20) tangential in den Kegelhohlraum (14) einströmenden Verbrennungsluftstrom (15) umschlossen wird, dass im Bereich der tangentialen Lufteintrittschlitze (19, 20) eine weitere Brennstoffzuführung (13, 16, 17) vorgegeben ist, dass die Zündung des Brennstoff/Luft-Gemisches am Ausgang des Brenners stattfindet, dass im Bereich der Brennermündung durch eine Rückströmzone (6) eine Stabilisierung der Flammenfront (7) entsteht.

## Claims

1. Combustion chamber of a gas turbine which surrounds the central part of the rotor of the gas turbine group in an annular manner, having a number of burners which can be effected on the front wall of the combustion chamber, the burners on the front wall occupying a plane, along the front wall (10) of the combustion chamber forming at least one double ring (10b, 10c), in each ring having the same direction of rotation of flow, and the direction of rotation of flow of the burners of each ring being opposite to that of the adjacent ring, characterized in that at least one burner at a time is displaced alternately outwards and inwards in each ring and in that the number of burners on the front wall is divided into piloting burners (A1, A2) and piloted burners (B1, B2).

2. Combustion chamber according to Claim 1, characterized in that the number of burners on the front wall (10) is divided into 5/6 piloting burners (A1, A2) and 1/6 piloted burners (B1, B2).

3. Combustion chamber according to Claim 1, characterized in that the burner consists of two hollow conical partial bodies (1, 2) which are positioned in the flow direction one upon the other and whose longitudinal axes of symmetry (1b, 2b) are offset relative to one another so that tangential air inlet slots (19, 20) flowing in opposite directions appear for a flow of combustion air (15), in that at least one nozzle (3) configured as head stage for the injection of a liquid and a gaseous fuel (12, 13) is placed in the hollow conical space (14) formed by the conical partial bodies (1, 2) and in that a fuel supply stage (8, 9) designed as main stage for introducing a gaseous fuel (13) is present in the region of the tangential air inlet slots (19, 20).

4. Method for operating a combustion chamber according to Claims 1-4, characterized in that the fuel is distributed to the head stage (3) of the piloting burners (A1, A2) when the combustion chamber is started and run up, in that the head stages (3) are put out of operation at 40-55% load and the fuel flow for the piloting burners (A1, A2) is supplied via the further supply stage (8, 9), in that the fuel flow for the piloting burners (A1, A2) remains constant between 40-55% and 65-80% load and in that the piloted burners (B1, B2) are put into operation above 65-80%.

5. Method according to Claim 4, characterized in that an increasing proportion of fuel (12) is injected via the head stage (3) when a proportion of water or steam is injected into the flame (7).

6. Method according to Claim 4, characterized in that the fuel injection (4) into the hollow conical space (14) of the burner at the head end forms a fuel column (5) which spreads as a cone in the flow direction, does not wet the inner walls of the hollow conical space (14) and is surrounded by at least one flow of combustion air (15) flowing tangentially into the hollow conical space (14) via the inlet slots (19, 20), in that a further fuel supply (13, 16, 17) is provided in the region of the tangential air inlet slots (19, 20), in that the ignition of the fuel/air mixture takes place at the outlet from the burner and in that stabilization of the flame front (7) in the region of the burner outlet opening takes place by means of a reverse flow zone (6).

## Revendications

1. Chambre de combustion d'un turbine à gaz, qui entoure sous forme annulaire la partie médiane du rotor du groupe de turbines à gaz, avec un certain nombre de brûleurs, qui sont activables sur la paroi frontale de la chambre de combustion, les brûleurs sur la paroi frontale renfermant un plan, formant le long de la paroi frontale (10) de la chambre de combustion au moins un anneau double (10b, 10c), présentant dans chaque anneau le même sens de rotation d'écoulement et le sens de rotation d'écoulement des brûleurs de chacun des anneaux étant opposé à celui de l'anneau voisin, caractérisée en ce que, dans chaque anneau, en alternance à chaque fois au moins un brûleur est décalé vers l'extérieur, respectivement vers l'intérieur, et en ce que le nombre de brûleurs sur la paroi frontale est subdivisée en brûleurs pilotants (A1, A2) et en brûleurs pilotés (B1, B2).

2. Chambre de combustion selon la revendication 1, caractérisée en ce que le nombre de brûleurs sur la paroi frontale (10) est subdivisé en 5/6 de brûleurs pilotants (A1, A2) et en un 1/6 de brûleurs pilotés (B1, B2).

3. Chambre de combustion selon la revendication 1, caractérisée en ce que le brûleur se compose de deux corps partiels (1, 2) creux, de forme conique, positionnés l'un sur l'autre en direction de l'écoulement, dont les axes de symétrie longitudinaux (1b, 2b) se prolongent de manière décalée l'un par rapport à l'autre, des fentes tangentielles d'admission d'air (19, 20), opposées du point de vue de l'écoulement, pour un courant d'air de combustion (15) étant ainsi formées, en ce que, dans l'espace creux conique (14) formé par les corps partiels de forme conique (1, 2) est placée au moins une buse (3) formée en tant qu'étage de tête pour l'injection d'un combustible liquide et d'un combustible gazeux (12, 13), en ce que, dans le domaine des fentes tangentielles d'admission d'air (19, 20), est présent un étage d'alimentation de combustible (8, 9) formé en tant qu'étage principal pour l'introduction d'un combustible gazeux (13).

4. Procédé d'opération d'une chambre de combustion selon les revendications 1-4, caractérisé en ce que, lors du démarrage et de la montée en puissance de la chambre de combustion, le combustible est distribué à l'étage de tête (3) des brûleurs pilotants (A1, A2), en ce que, en cas de charge de 40-55 %, les étages de tête (3) sont mis hors fonction et en ce que la quantité de combustible pour les brûleurs pilotants (A1, A2) est acheminée par l'intermédiaire d'étages d'alimentation supplémentaires (8, 9), en ce que, entre les charges 40-55 % et 65-80 %, la quantité de combustible pour les brûleurs pilotants (A1, A2) reste constante, en ce que, au-delà de la charge de 65-80 %, a lieu la mise en marche des brûleurs pilotés (B1, B2).

5. Procédé selon la revendication 4, caractérisé en ce que l'on injecte une proportion croissante de combustible (12) par l'intermédiaire de l'étage de tête (3) en cas de pulvérisation d'une portion d'eau ou de vapeur dans la flamme (7).

6. Procédé selon la revendication 4, caractérisé en ce que l'injection de combustible du côté tête (4) dans l'espace creux conique (14) du brûleur forme une colonne de combustible (5) s'élargissant sous forme conique en direction de l'écoulement, qui ne mouille pas les parois internes de l'espace creux conique (14), laquelle colonne est entourée d'au moins un courant d'air de combustion (15) affluant par les fentes d'admission (19, 20) tangentiellement dans l'espace creux conique (14), en ce que, dans le domaine des fentes tangentielles d'admission d'air (19, 20), est prévue une alimentation de combustible supplémentaire (13, 16, 17), en ce que l'allumage du mélange combustible/air se produit à la sortie du brûleur, en ce que, dans le domaine de l'embouchure du brûleur, se produit, grâce à une zone de courant de reflux (6), une stabilisation du front de flammes (7).
